# EUROPEAN PATENT APPLICATION

(11) **EP 2 189 320 A1**
(43) Date of publication of application: **26.05.2010**
(21) Application number: 08425745.0
(22) Date of filing: 20.11.2008
(51) Int. Cl.: B60L 3/00, B60L 9/00, B60L 15/32

(54) **Railway vehicle**

(71) Applicant: ALSTOM Transport SA, 92300 Levallois-Perret (FR)
(72) Inventor: Bogliani, Paolo, 20099 Sesto San Giovanni Milano (IT)
(74) Representative: Karaghiosoff, Giorgio Alessandro

(57) **Abstract**

A railway vehicle comprising at least one first truck (2) and one second truck (12), which first and second trucks (2, 12) are provided at the ends of the railway vehicle, whereas each truck (2, 12) has at least one motorized axle (102, 202; 112, 212), i.e. driven by a motor (302, 402; 312, 412), each axle of each truck (2, 12) being driven by a separate traction motor (302, 402; 312, 412), whereas each separate traction motor (302, 402; 312, 412) is supplied with power by a converter or inverter (502, 512) dedicated to such traction motor (302, 402; 312, 412).

According to the invention, should the power supply converter (502, 512) of a first motor (302, 402; 312, 412) fail to operate, said first motor will be supplied by the converter (502, 512) of a second motor (302, 402; 312, 412) along with such second motor (302, 402; 312, 412).

## Description

The invention relates to a railway vehicle comprising at least two trucks, located at the ends of the vehicle, and both having motorized axles, each being driven by its own traction motor, which is in turn supplied with power by a converter.

Railway vehicles of this type are known in the art and widely used. For example, low-floor trains are used in local or regional transport, composed of at least two end cars, i.e. head and tail cars (in the direction of travel) and at least one intermediate car. Each of said end cars has at least one truck, typically with at least two axles, each of which axles is driven by its own traction motor. Each pair of motors driving the axles of a truck are in turn supplied by a dedicated power-supply converter, also known as inverter. Such converter changes the amplitude and frequency of the supply voltage to adjust the rotation speed and the power delivered to the motor.

In case of traction unit failure in a railway vehicle having multiple motorized axles as disclosed above, at least some of the motors, and hence some of the axles may maintain their full function, while other motors may become totally inoperative. In these cases, the admitted traction power loss for the railway vehicle to operate, known as derating, is about 25%. This means that, in a vehicle with four motors, a functional loss of one motor only is tolerated.

Nonetheless, in an arrangement like those described above, namely with four motors, in case of a failure or functional loss of a converter, the vehicle loses two of its four motors, and the power derating exceeds the admitted value.

The most common solution, providing one inverter per motor, undoubtedly provides optimal performances and availability, but suffers from the drawback of a generally bulkier and more expensive system.

Therefore, the invention has the object of providing a railway vehicle as described hereinbefore which uses simple and relatively inexpensive arrangements to obviate prior art drawbacks, especially concerning the provision of means for maintaining or restoring railway vehicle function in case of failure, particularly of the power-supply system for the motors, i.e. the converters.

The invention fulfils the above objects by providing a railway vehicle as described hereinbefore which has at least two trucks, located at the ends of the vehicle and having motorized axles, each driven by a dedicated traction motor which is in turn supplied by a converter: in case of failure of the converter of a first motor, said first motor will be supplied by the converter of a second motor along with said second motor itself.

As far as construction is concerned, the railway vehicle has at least one cross feeding power line which connects said first motor and said second motor with the outputs of the converters, switch means being provided for alternately connecting all the motors to at least one properly operating converter and isolating the inoperative converter.

More simply, said two motors may be interconnected by a common line downstream from the output of their corresponding converters and from a switch for opening/closing the connection of the converters with the corresponding motors.

The power input of a motor may be switched to the power output of the converter of another motor either manually or using automatic diagnostic means for assessing the operating state of the converters and controlling the switches on the cross power line of the motors to the converters.

Due to the above features, should a power-supply converter for the motors of a truck fail to operate, said motors will be supplied by the power-supply converter for the motors of another truck, while sharing such power supply with the latter. Thus, the converter will supply power to four motors instead of two.

In terms of construction, this solution is very simple and inexpensive because it requires no replication of the converters and their control electronics, and only requires a line for cross power supply of the motors of a truck by the converter associated to the motors of another truck and vice versa.

Such switching action may occur using simple switches.

Concerning the increased load for the operating converter, no further oversizing will be required, because converters are generally designed for starting effort. Increasing the speed , a constant effort automatically generates an increased power. Thus, the power delivered by the converter to four motors instead of two causes at the most a reduction of the force required for starting the vehicle from a stop, but at higher speeds, the power delivered by the converter to the four motors is more or less the same allowing the same high speed.

One embodiment provides a railway vehicle in which the first or the second truck or both trucks have two motorized axles, each with a dedicated motor, the motors of each truck being supplied with power by a common converter.

According to a variant embodiment, since a 25% derating is admitted for an acceptable function loss of the railway vehicle, which derating corresponds to the failure of one motor in case of a railway vehicle with four motors, then in case of failure of a converter for supplying power to two truck axle driving motors, one of the two motors whose converter has failed to operate may be connected to the converter of another truck, for supplying power to said motor as well as to the motors of said truck.

Here, on the one hand derating is limited to the maximum admitted threshold of 25% and on the other hand the operating converter is only required to supply three motors, wherefore the power required therefrom is certainly lower than in the case of four motors.

This feature, like those described above, is also applicable to the case of trucks with more than two motorized axles, i.e. more than two motors per truck. Here, a connection network with switches may alternately connecting a number of motors that is lower than the maximum number on a truck to the converter of another truck.

More generally, according to the invention, with a railway vehicle having at least two trucks with two or more than two motorized axles for each truck, in case of failure of a converter for supplying power to two axle driving motors for a first truck, one of the two motors of said first truck or a given number of motors lower than the maximum number of motors on said truck whose converter has failed to operate may be connected to the power-supply converter of the motors of a second truck.

If each truck comprises three or more motors, like in a possible embodiment, each motor being part of the motors of each truck supplied with power by a converter, then a common power line may be provided for supplying power to the motors of each truck, which line has branches and switch and/or selector means for separately enabling or disabling the connection of each of the motors of each truck with the cross power line in case of failure of the power-supply converter dedicated thereto.

Since the inverters are located very close to the motors of the truck, they are designed for power supply in ordinary operating conditions and since the trucks with motorized axles are far from each other, i.e. at opposite ends of the railway vehicle, the cross power line for the motors of a truck to the power-supply converter of another truck is relatively long. Therefore, in case of failure, the load on the converter shared by all the motors is unbalanced. The useful power for the motor of the trucks with the operating converter is higher than that for the motors of the truck whose converter fails to operate. This should theoretically cause alterations in the operating parameters of the motors. Nonetheless, it was ascertained that such alterations are not particularly important and do not affect proper operation of the railway vehicle.

The length of the power line that connects the motors of a truck to the power-supply converter for the motors of another truck can cause reflections of the power signal which constructively combine with the power signals, wherefore the power signal may reach the terminals of the motors whose converter fails to operate with a voltage that may even be twice the voltage of the power signal.

For this purpose, RC filters may be provided in the cross power line suppling the motors of a truck by the converter of another truck, in order to suppress and/or attenuate any reflection signal that might be generated in said cross power line.

Further characteristics of the invention will form the subject of the dependent claims.

The characteristics of the invention and the advantages deriving therefrom will appear more clearly from the following description of one embodiment, which is shown by way of a non limiting embodiment in the annexed drawings, in which:
Figure 1 is a diagrammatic view of an exemplary vehicle of the present invention, in the form of a low-floor train for local and regional transport, composed of two end cars and an intermediate car.
Figure 2 is a block diagram of the power circuit of the motors of the two traction trucks at the head and/or tail ends of a railway vehicle as shown in Figure 1.
Figure 3 is a view similar to Figure 2, which shows a variant of the circuit of Figure 2.
Figures 4 and 5 are block diagrams similar to those of Figures 2 and 3, showing additional variant embodiments of the railway vehicle of the present invention.

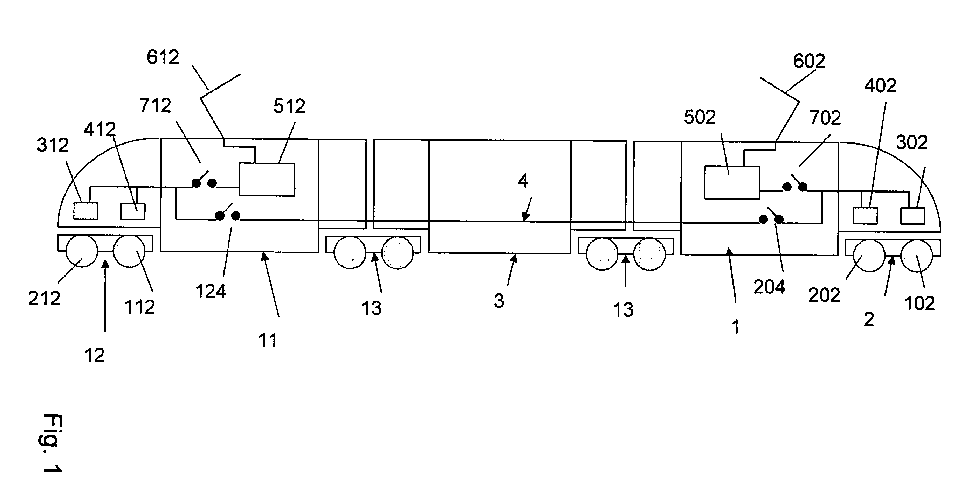

The railway vehicle as shown in Figure 1 shall not be intended to limit the scope the present invention, although the invention is particularly advantageous in its application to this kind of railway vehicles.

Namely, this is a schematic example of a railway vehicle or train for local or regional transport, of the low-floor type. In these trains, the motorized traction trucks 2, 12 are generally located at the ends of the end cars 1, 11. The two end cars may either be directly connected to each other or have an intermediate car 3 or more intermediate cars 3 interposed therebetween.

Cars may either be provided with independent trucks at their ends, like in prior art, or share the truck 13 with the next car, as shown in Figure 1.

Each motorized traction truck 2, 12 has at least one motorized axle, generally more than one motorized axle and particularly two motorized axles, like in the example of Figure 1. The axles are represented by the corresponding wheels, as shown by numerals 102, 202 for the truck 2 of the car and by numerals 112, 212 for the truck 12 of the car 11.

Each axle is rotatably driven by a dedicated motor 302, 402 and 312 and 412 and each pair of motors 302, 402 and 312 and 412 associated with the axles of one of the two trucks 2 and 12 respectively is supplied with power by a converter 502, 512 which in turn draws electric power from a power distribution system extending along the railway line or from other sources, such as on-board batteries or generators.

In the illustrated embodiment, the means 602, 612 for drawing electric power are represented without limitation by pantographs, which are designed to cooperate with overhead electrification lines.

A switch 702, 712 is provided at the output of each converter 502, 512, for opening the connection between the motors and the converter, whereas the two power lines extending from the outputs of the converters 502, 512, downstream from the switches 702, 712, are connected to each other by a cross power line 4.

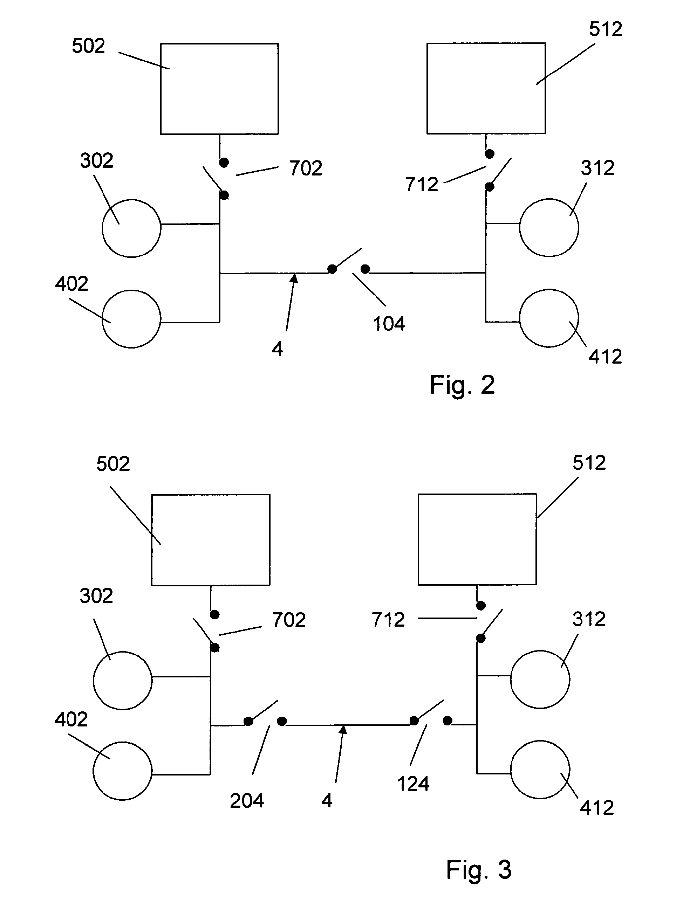

As shown in the block diagrams of Figures 2 and 3, the cross power line 4 may incorporate a single switch 104, as shown in Figure 2, or two switches 204, 124 as shown in Figures 1 and 3, which are located at one of the two converters 502, 512 respectively.

The following operating modes apply:

In a normal operating state, the switches 702, 712 are closed and the pairs of motors 302, 402 and 312, 412 of the trucks are directly supplied by the corresponding converter 502, 512.

The switch 104 of the embodiment of Figure 2 and the switches 204 and 124 of the embodiments of Figures 1 and 3 are open, wherefore the cross power line 4 is open.

Should one of the two converters 502 or 512 fail to operate, the corresponding switch 702 or 712 would be switched open, and the motors would be connected to the converter that is still operating, by closing the switches 104 or 204 and 124, in the embodiments of Figure 2 or 1 and 3 respectively.

This step may be carried out either manually or automatically by providing diagnostic means for assessing the operating states of the converters and controlling the switches 702, 712 and 104 or 204 and 124.

As shown in Figure 1, the cross power line 4 may be very long and, with converters that use high speed IGBT (Insulated Gate Bipolar Transistor) components, the step-signals may generate reflected waves and voltages at the end of the cross power line 4 may even be twice the initial voltage of the transmitted signal. For this purpose dampers may be provided in the line, such as RC filters of appropriate size.

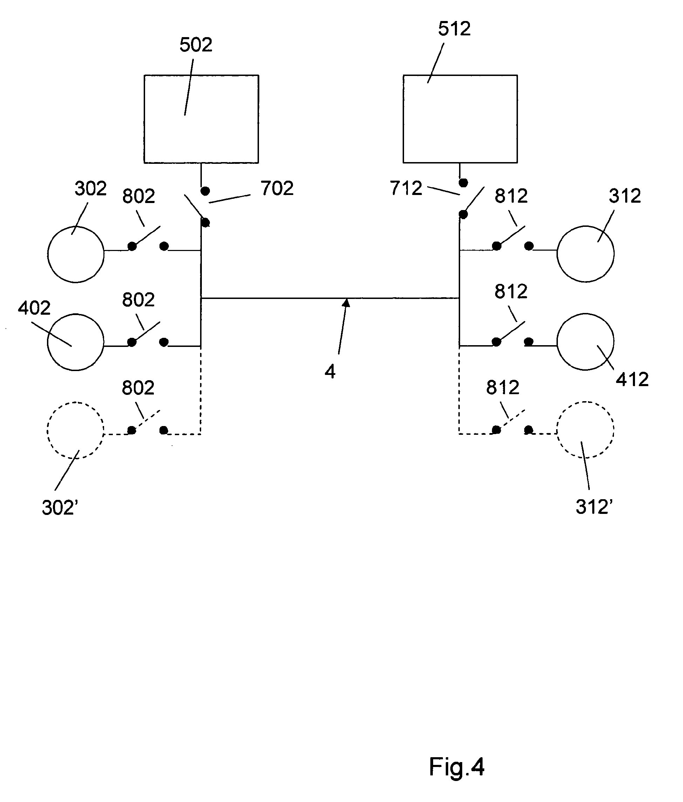

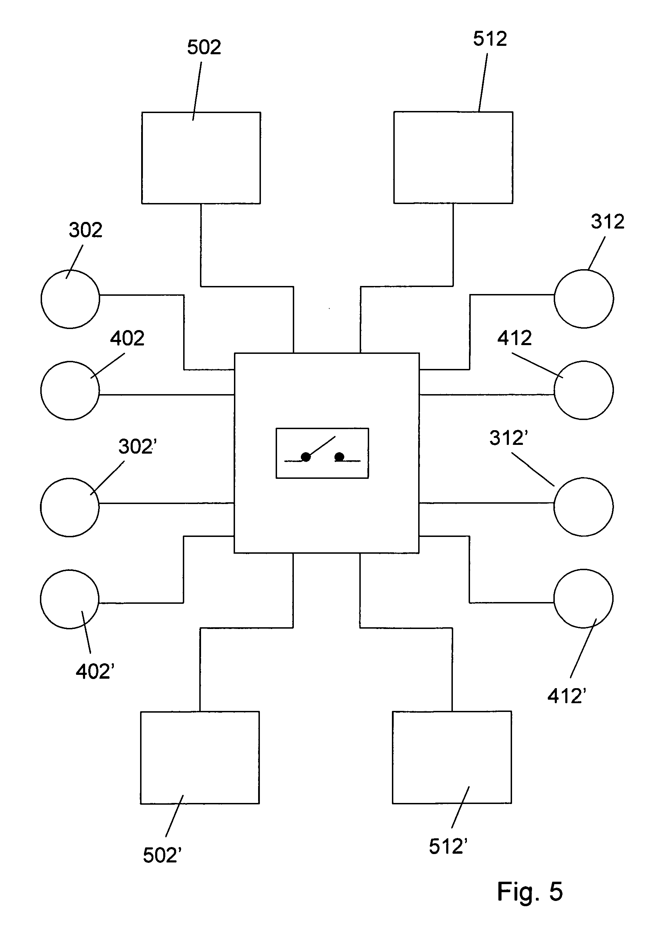

Referring to Figure 4 and Figure 5, there are shown block diagrams of variant embodiments in which trucks have more than two motorized axles, i.e. in which at least one converter supplies power to three or more motors.

Also, referring to Figure 4, a variant embodiment is shown, for independent connection of the individual motors 302, 402, 312, 412 and possibly a third motor 302' and 312' to the cross power line 4. In this case, the cross power line has a branch for each motor 302, 402, 302', 312, 412, 312', in which a switch 802, 812 is provided for separately enabling and disabling connection of each motor to said line 4. Concerning the switches 702, 712 for isolating the converters 502, 512 when these have failed to operate or are inoperative, a single switch may be provided.

In Figure 5, each of the trucks 2 and 12 has four motors 302, 402, 302', 402', 312, 412, 312', 412' which are supplied in groups of two by a common converter 502, 502', 512, 512'. Alternatively, this architecture also applies to the configuration with four trucks, each with two motors supplied by a common inverter.

Here, the cross power line and connections with the motors are managed by a connection controller 14 which can connect a predetermined number of motors of the two or four trucks to a predetermined number of converters when at least one converter has failed to operate, while minimizing power losses and overloads of the converters and maintaining power derating below the 25% threshold.

Such connection controller 14 may be of computerized type and be operated by a logical control software which calculates from time to time the best connection configuration between the motors and the converters that are still operating, as defined above.

## Claims

1. A railway vehicle comprising at least one first truck (2) and one second truck (12), which first and second trucks (2, 12) are provided at the ends of the railway vehicle, whereas each truck (2, 12) has at least one motorized axle (102, 202; 112, 212), i.e. driven by a motor (302, 402; 312, 412), each axle of each truck (2, 12) being driven by a separate traction motor (302, 402; 312, 412), whereas each separate traction motor (302, 402; 312, 412) is supplied with power by a converter or inverter (502, 512) dedicated to said traction motor (302, 402; 312, 412), **characterized in that**
should the power supply converter (502, 512) of a first motor (302, 402; 312, 412) fail to operate, said first motor will be supplied by the converter (502, 512) of a second motor (302, 402; 312, 412) along with said second motor (302, 402; 312, 412).

2. A railway vehicle as claimed in claim 1, **characterized in that** it has at least one cross power line (4) which connects said first motor and said second motor (302, 402; 312, 412) with the outputs of the converters (502, 512), switch means (702, 712, 104, 204, 124) being provided for alternately connecting all the motors to at least one properly operating converter (502, 512) and isolating the inoperative converter (502, 512).

3. A railway vehicle as claimed in claim 2, **characterized in that** at least one switch (104; 204, 124) is provided in said cross power line (4) for opening and closing said cross power line (4), whereas a switch (702, 712) is provided for opening and closing the connection of said first motor and said second motor (302, 402; 312, 412) with the corresponding dedicated converter (502, 512), which switches (702, 712) are switched to connect the first motor and the second motor (302, 402; 312, 412) to a single converter (502, 512) when one of the two converters fails to operate, the failing converter being disconnected.

4. A railway vehicle as claimed in claims 2 or 3, **characterized in that** said first and second motors are interconnected by a common cross power line which is connected to the power line at the output of each converter (502, 512) downstream from a switch (702, 712) for opening/closing the connection of the converter/s (502, 512) with the corresponding motor (302, 402; 312, 412).

5. A railway vehicle as claimed in one of claims 2 to 4, **characterized in that** automatic means are provided for switching the switches (702, 712, 104, 204, 124), which comprise a diagnostic unit for detecting the operating state of the converters (502, 512) and means for controlling the switches on the cross power line (4) connecting the converters (502, 512) with the corresponding motor (302, 402; 312, 412).

6. A railway vehicle as claimed in one or more of the preceding claims, **characterized in that** two switches (204, 124) are provided in the cross power line (4), each being provided at one of the two converters (502, 512).

7. A railway vehicle as claimed in one or more of the preceding claims, **characterized in that** RC filters are provided in the cross power line (4) for the motors (302, 402; 312, 412) of the first and second trucks (2, 12), for suppressing and/or attenuating the reflection signals of the power signal at the output of the converter.

8. A railway vehicle as claimed in one or more of the preceding claims, **characterized in that** the first or second truck or both trucks (2, 12) have two motorized axles, each with a dedicated motor (302, 402; 312, 412), the motors of each truck (2, 12) being supplied with power by a common converter (502, 512).

9. A railway vehicle as claimed in claim 8, **characterized in that,** in case of failure of a converter (502, 512) for supplying power to two or more axle driving motors (302, 402; 312, 412) for a first truck (2, 12), only one or some of the two or more motors (302, 402; 312, 412) of said first truck (2, 12), whose converter (502, 512) has failed to operate, may be connected to the power-supply converter (502, 521) of the motors (302, 402; 312, 412) of a second truck (2, 12).

10. A railway vehicle as claimed in claim 8 or 9, **characterized in that** each truck has three or more motors, each motor being part of the motors of each truck that are supplied with power by a converter.

11. A railway vehicle as claimed in claim 9 or 10, **characterized in that** a common power line is provided for the motors (302, 402; 312, 412) of each truck (2, 12), which line has branches and switch and/or selector means for separately enabling or disabling connection of each of the motors (302, 402; 312, 412) of each truck (2, 12) with the cross power line (4).

12. A railway vehicle as claimed in one or more of the preceding claims, **characterized in that** it is of the type comprising at least two end cars, i.e. head and tail cars (in the direction of travel), and at least one intermediate car, and in which each of said end cars has at least one truck with at least two axles, each of which axles is driven by a separate traction motor, whereas each pair of motors that drive the axles of a truck is in turn supplied with power by a dedicated power-supply converter, there being provided a cross power line (4) extending from the one to the other of the end cars and switch means for connection of at least part of the motors (302, 402, 312, 412) to a single converter (502, 512) in case of failure of the other.

## Amended claims

### Amended claims in accordance with Rule 137(2) EPC.

**1.** A railway vehicle comprising at least one first truck (2) and one second truck (12), which first and second trucks (2, 12) are provided at the ends of the railway vehicle, whereas each truck (2, 12) has at least one motorized axle (102, 202; 112, 212), i.e. driven by a motor (302, 402; 312, 412), each axle of each truck (2, 12) being driven by a separate traction motor (302, 402; 312, 412), whereas each separate traction motor (302, 402; 312, 412) is supplied with power by a converter or inverter (502, 512) dedicated to said traction motor (302, 402; 312, 412), **characterized in that**
at least one cross power line (4) is provided which connects said first motor and said second motor (302, 402; 312, 412) with the outputs of the converters (502, 512), while switch means (702, 712, 104, 204, 124) are provided for alternately connecting all the motors to at least one properly operating converter (502, 512) and isolating the inoperative converter (502, 512);
The said switch means comprising at least one switch (104; 204, 124) in said cross power line (4) for opening and closing said cross power line (4), and a switch (702, 712) for opening and closing the connection of said first motor and said second motor (302, 402; 312, 412) with the corresponding dedicated converter (502, 512), which switches (702, 712) are switched to connect the first motor and the second motor (302, 402; 312, 412) to a single converter (502, 512) in the case that the power supply converter (502, 512) of a first motor (302, 402; 312, 412) fail to operate, so that said first motor will be supplied by the converter (502, 512) of a second motor (302, 402; 312, 412) along with said second motor (302, 402; 312, 412).

**2.** A railway vehicle as claimed in claim 1, **characterized in that** said first and second motors are interconnected by a common cross power line which is connected to the power line at the output of each converter (502, 512) downstream from a switch (702, 712) for opening/closing the connection of the converter/s (502, 512) with the corresponding motor (302, 402; 312, 412).

**3.** A railway vehicle as claimed in one of claim 1 or 2, **characterized in that** automatic means are provided for switching the switches (702, 712, 104, 204, 124), which comprise a diagnostic unit for detecting the operating state of the converters (502, 512) and means for controlling the switches on the cross power line (4) connecting the converters (502, 512) with the corresponding motor (302, 402; 312, 412).

**4.** A railway vehicle as claimed in one or more of the preceding claims, **characterized in that** two switches (204, 124) are provided in the cross power line (4), each being provided at one of the two converters (502, 512).

**5.** A railway vehicle as claimed in one or more of the preceding claims, **characterized in that** RC filters are provided in the cross power line (4) for the motors (302, 402; 312, 412) of the first and second trucks (2, 12), for suppressing and/or attenuating the reflection signals of the power signal at the output of the converter.

**6.** A railway vehicle as claimed in one or more of the preceding claims, **characterized in that** the first or second truck or both trucks (2, 12) have two motorized axles, each with a dedicated motor (302, 402; 312, 412), the motors of each truck (2, 12) being supplied with power by a common converter (502, 512).

**7.** A railway vehicle as claimed in claim 6, **characterized in that**, in case of failure of a converter (502, 512) for supplying power to two or more axle driving motors (302, 402; 312, 412) for a first truck (2, 12), only one or some of the two or more motors (302, 402; 312, 412) of said first truck (2, 12), whose converter (502, 512) has failed to operate, may be connected to the power-supply converter (502, 521) of the motors (302, 402; 312, 412) of a second truck (2, 12).

**8.** A railway vehicle as claimed in claim 6 or 7, **characterized in that** each truck has three or more motors, each motor being part of the motors of each truck that are supplied with power by a converter.

**9.** A railway vehicle as claimed in claim 8 or 9, **characterized in that** a common power line is provided for the motors (302, 402; 312, 412) of each truck (2, 12), which line has branches and switch and/or selector means for separately enabling or disabling connection of each of the motors (302, 402; 312, 412) of each truck (2, 12) with the cross power line (4).

**10.** A railway vehicle as claimed in one or more of the preceding claims, **characterized in that** it is of the type comprising at least two end cars, i.e. head and tail cars (in the direction of travel), and at least one intermediate car, and in which each of said end cars has at least one truck with at least two axles, each of which axles is driven by a separate traction motor, whereas each pair of motors that drive the axles of a truck is in turn supplied with power by a dedicated power-supply converter, there being provided a cross power line (4) extending from the one to the other of the end cars and switch means for connection of at least part of the motors (302, 402, 312, 412) to a single converter (502, 512) in case of failure of the other.
